Europäisches Patentamt

European Patent Office

Office européen des brevets

(11) Publication number: **0 206 286**
**B1**

# EUROPEAN PATENT SPECIFICATION

(45) Date of publication of patent specification: **23.05.90**

(51) Int. Cl.⁵: **C 09 D 11/10**

(21) Application number: **86108459.8**

(22) Date of filing: **20.06.86**

(54) Ink jet printer ink.

(30) Priority: **25.06.85 US 748768**

(43) Date of publication of application:
**30.12.86 Bulletin 86/52**

(45) Publication of the grant of the patent:
**23.05.90 Bulletin 90/21**

(84) Designated Contracting States:
**DE FR GB IT**

(56) References cited:
**US-A-4 218 362**
**US-A-4 390 369**

(73) Proprietor: **HOWTEK, INC.**
**21 Park Avenue**
**Hudson New Hampshire 03051 (US)**

(72) Inventor: **Nowak, Michael T.**
**38 Meadowbrook Lane**
**Gardner, MA 01440 (US)**

(74) Representative: **Endlich, Fritz, Dipl.-Phys.**
**Postfach 1326 Blumenstrasse 8**
**D-8034 Germering (DE)**

Courier Press, Leamington Spa, England.

**Description**

Background of the Invention

A. Field of the Invention

The invention relates to printing inks for ink jet printers, and comprises a solid, hot-melt ink that is particularly suitable for subtractive color ink jet document printing.

B. Prior Art

Inks that are to be utilized in document printing by ink jet application are subject to demanding and frequently conflicting limitations.

The first is that imposed by the substrate itself, which is typically a fibrous material (e.g. paper) when viewed on a microscopic level. On such a substrate, ink that is applied to it must not soak in and spread or "bleed" excessively, lest the sharpness of the image be unacceptably reduced. As an example of the degree of sharpness required, current applications require a resolution on the order of 240x400 (i.e. 240 dots per 25,4 mm in the horizontal direction, and 400 dots per 25,4 mm in the vertical direction) for text printing. High quality graphics printing requires resolutions extending up 600 dots per 25,4 mm. Further, the ink must be resistant to abrasion, as well as to inadvertant transfer to adjacent materials. Additionally, since the document may be carried through a variety of climates, the ink must remain stable at temperatures ranging from -20°C to +150°C. These restrictions are fairly severe when applied to black ink, but are even more severe when applied to colored inks, since even minor changes in color are frequently noticeable.

In the case of inks that are to be applied by ink jet techniques, the problem is even further compounded by the requirement that the inks be compatible with jetting requirements of the printer. Typically, this application imposes restrictions on, for example, the viscosity of the inks, so that the inks can be expelled from the jet as relatively uniform droplets without excessive satelliting. Additionally, the constituents must all be compatible with each other, both physically (i.e. capable of forming a solution which can be jetted successfully) and chemically (i.e. not adversely affecting the stability or other characteristics of the materials).

Most of the inks heretofore utilized in ink jet printers have been aqueous solutions of water-soluble dyes. Examples of such inks are described in U. S. Pat. No. 3,846,141, issued Nov. 5, 1974 to D. G. Ostergren et al, and U. S. Pat. No. 4,512,807 to A. Ogawa et al. Inks of this type have been found acceptable for many applications, but do not have the desired hardness of the resultant print, not the requisite stability and sharpness for fine color applications.

An example of a non-aqueous ink jet ink is described in U. S. Pat. No. 4,390,369, issued June 28, 1963 to A. R. Merritt et al. The ink described therein utilizes a natural wax which is liquified by heating in order to jet it and which is thereafter solidified on contact with the substrate, e.g. paper. Among other drawbacks, however, the resultant material readily abrades, and is thus unacceptable for most document purposes where some degree of print stability is required.

Brief Summary of the Invention

A. Objects of the Invention

Accordingly, it is an object of the invention to provide an improved ink for ink jet printers.

Further, it is an object of the invention to provide an ink for ink jet printers that is resistant to abrasion and that is relatively stable over a wide range of temperatures.

Yet another object of the invention is to provide an ink for ink jet printers that possesses good jetting characteristics.

Still a further object of the invention is to provide an ink for ink jet printers that can form a sharp image of high resolution.

B. Brief Summary of the Invention

In accordance with the present invention, an ink jet printer ink is formed from a mixture of a thermosetting resin having a high hydroxyl number and preferably a low acid number and comprising from e.g. 5 to 40 w% (weight percent) of the resultant mixture, and a solid organic solvent characterized by a low acid number and comprising from e.g. 60 to 95 w% of the mixture, together with a minor amount (on the order of about 1 w% or less) of a temperature-stable subtractive dye. By "high hydroxyl number" is meant a hydroxyl number in excess of 50; by "low acid number" is meant an acid number less than 10.

In particular, in accordance with the preferred embodiment of the invention, the resin comprises a polyester, specifically, a linear saturated polyester resin of low molecular weight (i.e. in the range of from 50 to 10,000) and low acid number but high hydroxyl number. From observation of this and other materials tested, it is believed that the presence of significant hydroxyl content provides substantial hydrogen bonding which maintains the integrity of individual drops as they are expelled from the jet, despite the substantial temperature (on the order of 125°C) and pressure to which they are subjected during expulsion. This results in ink droplets which are uniform and fine, and which are relatively free of satellites as they travel to the paper.

An excellent example of such a resin, and one that has been found especially satisfactory herein, is sold under the trade name Desmophen 650A-65 by Mobay Chemical Corporation and has a hydroxyl number in the range of from 155-190. Its characteristics are described more fully hereinafter. The preferred solvent comprises toluenesulfonamide, particularly a mixture of ortho- and para-toluenesulfonamide. Such a mixture lowers the resultant melting point and thus allows jetting at lower temperatures. A particularly suitable solvent has been found to be the solvent sold under the trademark "Santicizer 9" by the Monsanto Chemical Corp., as also described more fully hereinafter.

Detailed Description of the Invention

A mixture was formed by adding 10 parts by weight of Desmophen 650A to 90 parts by weight of Santicizer 9 to form a base for a dye. A stabilizer in the form of a phosphite antioxidant (approximately 1 w%) was then added. A magenta subtractive ink was then formed by adding to the mixture .75 parts by weight of Atlantic Atlasol Magenta M (Solvent Red 49). Similarly, yellow, blue and black inks for subtractive printing were obtained by adding to the base mixture .6 parts by weight of Atlantic Atlasol Yellow BB (Solvent Yellow 42), 0.4 parts by weight of Ciba Geigy Orasol Blue GN (Solvent Blue 67), and 2.0 parts by weight of Sandoz Sayinyc Black RLS (Solvent Black 45).

The resin and solvent used in the foregoing example have the following principal characteristics:

| | Desmophen 650A | Santicizer 9 |
|---|---|---|
| hydroxyl number | | 155-190 |
| acid number | 3.0 (max) | pH 4.0 |
| (min) | | |
| specific gravity | 1.17 | 1.353 |
| crystallizing point | | 105°C |
| boiling point | | 214°C |
| flash point | 49°C | |
| molecular weight | 325 (average) | 171 |

The materials are non-toxic, and have essentially no odor.

The resultant mixtures were jetted onto a paper substrate through a plastic jet having a diameter of on the order of 0,76 mm at frequencies up to in excess of 10,000 Hz and at a temperature of on the order of 125°C. The print copy so formed was characterized by a raised texture similar to engraving, and of excellent dot resolution and sharpness. The print was hard and resistant to abrasion, as well as to transfer from document to document. It dried quickly on the surface of the paper, but nonetheless formed a tenacious bond with it. The color remained stable, without appreciable color shift, even when subjected to a temperatures on the order of 150°C for a week. The ink did not clog the jet even when left in it for extended periods of time at the jetting temperature, and it remained stable in the jet printer at a temperature of 150°C for weeks. The ink possessed a viscosity well within the desired range of from 0,005-0,03 Pas and, specifically, its viscosity was approximately 0,017 Pas; it jetted consistently without significant satelliting.

The ink described herein has been found particularly useful in connection with an ink jet printer using a plastic jet that is the subject of a related application. The jet described therein is formed from a polyetheretherketone material. As described in that application, such a material has many characteristics that render it advantageous for use in forming an ink jet but it is nonetheless susceptible to attack by many of the inks commonly used for such purposes. The present ink does not attack that material, and is thus highly desirable for use with it, although its application is not so limited.

Conclusion

From the foregoing it will be seen that I have provided an improved ink for ink jet printers. The ink has excellent jetting characteristics, forms a hard, stable, print raised above the surface of the substrate, provides high dot resolution, and remains colorfast both in the ink jet printer and on the paper even though exposed to continued high temperature. It is non-toxic and odorless, and eminently suitable for office document preparation, among other applications.

**Claims**

1. A hot-melt ink for ink jet printers, consisting primarily of a thermosetting resin having a high hydroxyl number of at least 50 and a solid organic solvent having a melting point less than 150°C, together with a minor portion of dye material.

EP 0 206 286 B1

2. A hot-melt ink according to claim 1 in which said hydroxyl number is in excess of 50.

3. A hot-melt ink according to claim 2 in which said resin consists of a linear saturated polyester resin of low molecular weight.

4. A hot-melt ink according to claim 1 in which said solvent consists primarily of an aromatic sulfonamide.

5. A hot-melt ink according to claim 4 in which said solvent consists primarily of toluenesulfonamide.

6. A hot-melt ink according to claim 1 in which said solvent consists primarily of a primary sulfonamide.

7. A hot-melt ink according to claim 1 in which said solvent consists primarily of a mixture of ortho- and para-toluenesulfonamide.

8. A hot-melt ink comprising from 5 to 40 parts by weight of a linear saturated polyester resin of a high hydroxyl number of at least 50 and a low acid number less than 10 and from 95 to 60 parts by weight of a solid organic solvent having a melting point less than 150°C, together with a color-subtractive dye.

9. A hot-melt ink according to claim 8 in which said solvent comprises an aromatic sulfonamide.

10. A hot-melt ink according to claim 9 in which said solvent comprises toluenesulfonamide.

**Patentansprüche**

1. Tinte für Tintenstrahldrucker aus einem bei Erwärmung schmelzendem Material, das in erster Linie aus einem hitzehärtbaren Harz mit einer hohen Hydroxylzahl von mindestens 50 und einem festen organischen Lösungsmittel mit einem Schmelzpunkt von weniger als 150°C besteht, zusammen mit einem geringen Anteil an Farbstoff.

2. Tinte nach Anspruch 1, wobei die Hydroxylzahl mehr als 50 beträgt.

3. Tinte nach Anspruch 2, wobei das Harz aus einem linearen gesättigten Polyesterharz mit niedrigem Molekulargewicht besteht.

4. Tinte nach Anspruch 1, wobei das Lösungsmittel in erster Linie aus einem aromatischen Sulfonamid besteht.

5. Tinte nach Anspruch 4, wobei das Lösungsmittel in erster Linie aus Toluolsulfonamid besteht.

6. Tinte nach Anspruch 1, wobei das Lösungsmittel in erster Linie aus einem primären Sulfonamid besteht.

7. Tinte nach Anspruch 1, wobei das Lösungsmittel in erster Linie aus einer Mischung von Ortho- und Para-Toluolsulfonamid besteht.

8. Bei Erwärmung schmelzende Tinte, bestehend aus 5 bis 40 Gewichtsteilen eines linearen gesättigten Polyesterharzes mit einer hohen Hydroxylzahl von mindestens 50 und einer niedrigen Säurezahl von weniger als 10 und 95 bis 60 Gewichtsteilen eines festen organischen Lösungsmittels mit einem Schmelzpunkt von weniger als 150°C, zusammen mit einem subtraktiven Farbstoff.

9. Tinte nach Anspruch 8, wobei das Lösungsmittel aus einem aromatischen Sulfonamid besteht.

10. Tinte nach Anspruch 9, wobei das Lösungsmittel aus Toluolsulfonamid besteht.

**Revendications**

1. Encre thermofusible pour imprimantes à jet d'encre, principalement constituée d'une résine thermodurcissable ayant un indice d'hydroxyle élevé, d'au moins 50, et d'un solvant organique ayant un point de fusion inférieur à 150°C, associé à une proportion mineure de matériau colorant.

2. Encre thermofusible selon la revendication 1, dans laquelle ledit indice d'hydroxyle dépasse 50.

3. Encre thermofusible selon la revendication 2, dans laquelle ladite résine est constituée par une résine polyester saturée linéaire de faible masse moléculaire.

4. Encre thermofusible selon la revendication 1, dans laquelle ledit solvant est essentiellement constitué d'un sulfonamide aromatique.

5. Encre thermofusible selon la revendication 4, dans laquelle ledit solvant est essentiellement constitué de toluène sulfonamide.

6. Encre thermofusible selon la revendication 1, dans laquelle ledit solvant est essentiellement constitué d'un sulfonamide primaire.

7. Encre thermofusible selon la revendication 1, dans laquelle ledit solvant est essentiellement constitué d'un mélange d'ortho et de para-toluène sulfonamide.

8. Encre thermofusible comprenant de 5 à 40 parties en poids d'une résine polyester saturée linéaire d'indice d'hydroxyle élevé, d'au moins 50 et de faible indice d'acide, inférieur à 10, et de 95 à 60 parties en poids d'un solvant organique solide ayant un point de fusion inférieur à 150°C, associé à un colorant à soustraction des couleurs.

9. Encre thermofusible selon la revendication 8, dans laquelle ledit solvant comprend un sulfonamide aromatique.

10. Encre thermofusible selon la revendication 9, dans laquelle ledit solvant comprend du toluène sulfonamide.